Europäisches Patentamt

European Patent Office

Office européen des brevets

(11) Veröffentlichungsnummer: **0 440 936 A2**

# (12) EUROPÄISCHE PATENTANMELDUNG

(21) Anmeldenummer: 90124181.0

(22) Anmeldetag: 14.12.90

(51) Int. Cl.$^5$: **B22F 1/00**, H01G 9/05

(30) Priorität: 03.02.90 DE 4003253

(43) Veröffentlichungstag der Anmeldung:
14.08.91 Patentblatt 91/33

(84) Benannte Vertragsstaaten:
DE FR GB

(71) Anmelder: Hermann C. Starck Berlin GmbH &
Co. KG
Eschenallee 36
W-1000 Berlin 19(DE)

(72) Erfinder: Wolf, Rüdiger, Dr.
Am Heiligenberg 8
W-3387 Vienenburg 3(DE)

(74) Vertreter: Steiling, Lothar, Dr. et al
c/o Bayer AG Konzernverwaltung RP Patente
Konzern
W-5090 Leverkusen 1 Bayerwerk(DE)

(54) Hochkapazitive Erdsäuremetallpulver, Verfahren zu ihrer Herstellung sowie deren Verwendung.

(57) Die Erfindung betrifft aus Agglomeraten bestehende, hochkapazitive, oberflächenarme und sauerstoffarme Erdsäuremetallpulver zur Herstellung von Sinteranoden für Elektrolytkondensatoren, Verfahren zu ihrer Herstellung sowie deren Verwendung.

EP 0 440 936 A2

## HOCHKAPAZITIVE ERDSÄUREMETALLPULVER, VERFAHREN ZU IHRER HERSTELLUNG SOWIE DEREN VERWENDUNG

Die vorliegende Erfindung betrifft aus Agglomeraten bestehende, hochkapazitive, oberflächenarme und sauerstoffarme Erdsäuremetallpulver zur Herstellung von Sinteranoden für Elektrolytkondensatoren, Verfahren zu ihrer Herstellung sowie deren Verwendung.

Aus der DE-A 2 517 180 ist bekannt, hochkapazitive Ventilmetallpulver hoher Reinheit durch Reduktion von komplexen Halogeniden der Erdsäureelemente Niob und/oder Tantal mit Alkali- oder Erdalkalimetallen herzustellen. Aus der DE-A 3 130 392 ist ferner bekannt, das gewonnene Ventilmetallpulver einer schonenden thermischen Nachbehandlung, z.B. einer desoxidierenden Agglomeration zu unterziehen.

Unabhängig von der Darstellungsmethode zeigen alle nach dem Stand der Technik hergestellten hochkapazitiven Ventilmetallpulver den Nachteil, daß eine Erhöhung der dielektrischen spezifischen Ladung (Kapazität) stets an eine starke Zunahme der Oberfläche gebunden ist. Da sich diese Metallpulver-Oberfläche unvermeidbar mit Sauerstoff belädt, steigt dementsprechend auch der Sauerstoffgehalt des Ventilmetallpulvers Dies ist nicht nur für die elektrischen Eigenschaften von Nachteil, insbesondere für die spezifische Leckrate der Ventilmetallkondensatoranoden, sondern auch für die mechanische Festigkeit der Anodendrahtzuführungen, weil Sauerstoffgehalte zu Drahtbruch führen.

Aufgabe dieser Erfindung ist die Bereitstellung von Ventilmetallpulvern, die diese Nachteile nicht aufweisen.

Überraschenderweise wurde nun gefunden, daß diese Forderungen erfüllt werden durch erfindungsgemäße, aus Agglomeraten bestehende, hochkapazitive, oberflächenarme und sauerstoffarme Erdsäuremetallpulver zur Herstellung von Sinteranoden für Elektrolytkondensatoren, wobei aus dem Erdsäuremetallpulver bei einer Preßdichte von 4,5 g/cm³ 20 Minuten bei 1.400 °C hergestellte Sinteranoden eine spezifische elektrische Ladung von mehr als 25 mc/g aufweisen. Diese Erdsäuremetallpulver sind Gegenstand dieser Erfindung.

In einer bevorzugten Ausführungsform sind die erfindungsgemäßen Erdsäuremetallpulver dadurch gekennzeichnet, daß die - wie oben beschrieben - daraus hergestellten Sinteranoden eine spezifische Ladung von mehr als 60 mC/m², bezogen auf die Oberfläche des ungesinterten Erdsäuremetallpulvers, aufweisen.

Das Produkt aus der spezifischen Oberfläche (m²/g) und dem Sauerstoffgehalt (ppm) des ungesinterten Ventilmetallpulvers liefert bei den erfindungsgemäßen Erdsäuremetallpulvern bevorzugt eine Kenngröße von weniger als

$$1.100 \quad ppm \cdot \frac{m^2}{g} \; .$$

Die erfindungsgemäßen Erdsäuremetallpulver, die eine spezifische elektrische Ladung von >25 mC/g und Sauerstoffgehalte von <2.000 ppm aufweisen, können erhalten werden, indem durch reduktive Agglomerierung erhaltene hochkapazitive Ventilmetallpulver nachträglich noch einer chemischen Oberflächenbehandlung unterworfen werden.

Gegenstand dieser Erfindung ist somit auch ein Verfahren zur Herstellung der erfindungsgemäßen Erdsäuremetallpulver, welches dadurch gekennzeichnet ist, daß durch reduktive Agglomerierung erhaltene hochkapazitive Erdsäuremetallpulver mit komplexbildenden Reagenzien behandelt werden. Verfahren zur reduktiven Agglomerierung wird beispielsweise in der DE-A 3 130 392 beschrieben. Die erfindungsgemäße Behandlung wird vorteilhaft so lange durchgeführt, bis ein wesentlicher Teil der dielektrisch unwirksamen Oberfläche der Erdsäuremetallpulver abgebaut ist. Bevorzugte komplexbildende Reagenzien im Sinne dieser Erfindung sind Oxalsäure, Weinsäure, Flußsäure oder ein Gemisch aus Flußsäure und Wasserstoffperoxid.

Gegenstand dieser Erfindung ist auch die Verwendung der erfindungsgemäßen Erdsäuremetallpulver für die Herstellung von Elektrolytkondensatoren.

Im folgenden wird die Erfindung beispielhaft erläutert, ohne daß hierin eine Einschränkung zu sehen ist.

Beispiele

Beispiel 1

50 kg Primär-Tantalmetallpulver aus der Natriumreduktion mit einem Sauerstoffgehalt von 0,75 % (7.500 ppm) wurden in einem Vakuumofen im Tantal-Tiegel bei 1.250°C im Hochvakuum 60 Minuten lang thermisch agglomeriert. Das Agglomerat wurde unter Zugabe von Siebhilfsmitteln (Tantal-Kugeln) auf < 250 $\mu$m abgesiebt. Das Siebgut wurde in einem zweiten Agglomerierschritt im gleichen Ofen anschließend bei 1.475°C für 13 Minuten erneut thermisch behandelt. Das wiederum auf < 250 $\mu$m abgesiebte, nunmehr doppelt agglomerierte Tantal-Pulver wurde mittels Magnesiumspänen unter Schutzgas gemäß DE-A 31 30 392 desoxidiert und das Reaktionsprodukt mit Salzsäure zwecks Entfernung des gebildeten MgO ausgelaugt. Das desoxidierte Tantalpulver mit 2.460 ppm $O_2$ wurde mit 125 l einer wäßrigen Lösung von 1 % HF und 2 % $H_2O_2$ in einem Kunststoffbehälter unter intermittierendem Rühren 40 Minuten lang behandelt. Das säurefrei gewaschene und getrocknete Tantal-Kondensatorpulver mit einem $O_2$-Gehalt von nunmehr 1.450 ppm und einer spezifischen Oberfläche von 0,42 $m^2/g$ wurde zu Anoden mit einer Preßdichte von 4,5 $g/cm^3$ gepreßt, die dann bei 1.400°C 20 Minuten lang gesintert wurden. Der elektrische Test nach Formieren auf 70 Volt in 0,1 % $H_3PO_4$ bei 60°C ergab folgende Daten:

```
Spezifische elektrische Ladung:          = 25.506 µC/g

Relativer Leckstrom:                     = 0,35 nA/µC

O₂                                       = 1.450 ppm

BET-Oberfläche des Kondensatorpulvers:   = 0,42 m²/g

Elektrische Oberflächen-Ladung:          = 60.728 µC/m²

Produkt: O₂-Gehalt · BET-Oberfläche:     =              m²
                                         609   ppm ·   ——
                                                        g
```

Beispiel 2

50 kg Primär-Tantalpulver mit 1,43 % $O_2$ wurde wie in Beispiel 1 zweistufig agglomeriert und anschließend desoxidiert Das durch HCl-Laugung von MgO befreite Pulver mit 2.870 ppm $O_2$ wurde mit 40 l heißgesättigter Oxalsäure 3 Stunden lang unter intermittierendem Rühren nachbehandelt. Das säurefrei gewaschene Kondensatorpulver mit nunmehr 1.720 ppm $O_2$ und einer spezifischen Oberfläche von 0,48 $m^2/g$ zeigte im elektrischen Test (Anode mit Preßdichte 4,5 $g/cm^3$ ; Sinterung bei 1.400°C, 20 Min., 70 Volt-Formierung in 0,1 % $H_3PO_4$ bei 60°C) folgende Daten:

```
Spezifische elektrische Ladung:          = 29.059 µC/g

Relativer Leckstrom:                     = 0,6 nA/µC

O₂                                       = 1.720 ppm

BET-Oberfläche des Kondensatorpulvers:   = 0,48 m²/g

Elektrische Oberflächen-Ladung:          = 60.540 µC/m²

Produkt: O₂-Gehalt · BET-Oberfläche:     =              m²
                                         826   ppm ·   ——
                                                        g
```

**Patentansprüche**

1. Aus Agglomeraten bestehende, hochkapazitive, oberflächenarme und sauerstoffarme Erdsäuremetallpulver zur Herstellung von Sinteranoden für Elektrolytkondensatoren, dadurch gekennzeichnet, daß aus dem Erdsäuremetallpulver bei einer Preßdichte von 4,5 $g/cm^3$ 20 Minuten bei 1.400°C hergestellte Sinteranoden eine spezifische elektrische Ladung von mehr als 25 mC/g aufweisen.

2. Hochkapazitive, oberflächenarme und sauerstoffarme Erdsäuremetallpulver gemäß Anspruch 1, dadurch gekennzeichnet, daß die Sinteranoden eine spezifische Ladung von mehr als 60 mC/m² ,

bezogen auf die Oberfläche des ungesinterten Erdsäuremetallpulvers, aufweisen.

3. Hochkapazitive, oberflächenarme und sauerstoffarme Erdsäuremetallpulver gemäß den Ansprüchen 1 und 2, dadurch gekennzeichnet, daß das Produkt aus spezifischer Oberfläche und Sauerstoffgehalt des ungesinterten Erdsäuremetallpulvers den Wert von

$$1.100 \quad ppm \cdot \frac{m^2}{g}$$

nicht überschreitet.

4. Verfahren zur Herstellung der Erdsäuremetallpulver gemäß einem oder mehrerer der Ansprüche 1 bis 3, dadurch gekennzeichnet, daß durch reduktive Agglomerierung erhaltene hochkapazitive Erdsäuremetallpulver mit komplexbildenden Reagenzien behandelt werden.

5. Verfahren gemäß Anspruch 4, dadurch gekennzeichnet, daß die komplexbildenden Reagenzien Oxalsäure, Weinsäure, Flußsäure oder ein Gemisch aus Flußsäure und Wasserstoffperoxid sind.

6. Verwendung der Erdsäuremetallpulver gemäß einem oder mehrerer der Ansprüche 1 bis 5 für die Herstellung von Elektrolytkondensatoren.